(19) Europäisches Patentamt
European Patent Office
Office européen des brevets

(11) EP 4 726 608 A2

(12) EUROPEAN PATENT APPLICATION

(43) Date of publication:
15.04.2026 Bulletin 2026/16

(51) International Patent Classification (IPC):
*G06N 3/08* (2023.01)

(21) Application number: 26160771.7

(22) Date of filing: 15.05.2024

(52) Cooperative Patent Classification (CPC):
G06F 30/10; G06F 30/23; G06N 3/02; G06N 3/044;
G06N 3/045; G06N 3/08; G06N 3/084; G06N 5/01

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR

(30) Priority: 07.07.2023 US 202363512356 P
11.03.2024 US 202418601807

(62) Document number(s) of the earlier application(s) in
accordance with Art. 76 EPC:
24175951.3 / 4 488 867

(71) Applicant: The Boeing Company
Arlington, VA 22202 (US)

(72) Inventors:
• Zhang, Henry Zhenhua
Arlington, 22202 (US)
• Martin, Lindsay Joan
Arlington, 22202 (US)
• Tseng, Kevin Kuang-Hui
Arlington, 22202 (US)
• Nguyen, Quang Huy
Arlington, 22202 (US)

(74) Representative: Witte, Weller & Partner
Patentanwälte mbB
Postfach 10 54 62
70047 Stuttgart (DE)

Remarks:
This application was filed on 25-02-2026 as a
divisional application to the application mentioned
under INID code 62.

(54) **COMPUTING RAY PATH BETWEEN SOURCE ANTENNA LOCATION AND DESTINATION ANTENNA LOCATION**

(57) A computing system (10) including a processor (14) configured to receive a mesh (30) of a three-dimensional geometry (38). The processor is further configured to receive a source antenna location (40) and a destination antenna location (42) on the mesh. The processor is further configured to compute a ray path (60) as an estimated shortest path between the source antenna location and the destination antenna location. The ray path includes a geodesic path (62) over the mesh and a free space path (64) outside the mesh. The ray path is computed at least in part by computing the geodesic path at least in part by performing inferencing at a trained neural network (52). Computing the ray path further includes computing the free space path at least in part by performing raytracing from a launch point (66) located at an endpoint of the geodesic path. The processor is further configured to output the ray path to an additional computing process (70).

FIG. 1

EP 4 726 608 A2

**Description**

CROSS REFERENCE TO RELATED APPLICATIONS

This application claims priority to U.S. Provisional Patent Application Serial Number 63/512,356, filed July 7, 2023, and U.S. Patent Application Serial Number 18/601,807, filed 11 March 2024, the entireties of which are hereby incorporated herein by reference for all purposes.

FIELD

This application is related to ray path computation in the context of electromagnetic simulation of physical systems.

BACKGROUND

When engineering systems and devices that utilize electromagnetic communication, such as via radio or infrared signals, the geometric properties of such systems and devices affect their communication capabilities. For example, diffraction around portions of the device or around other structures can affect signal strength at different locations in the system. The developer of a system that uses electromagnetic communication can use information about the diffraction properties of the system to select the locations of antennas that transmit and/or receive electromagnetic signals.

Existing approaches to computing the electromagnetic properties of structures frequently take indications of ray paths as input. These ray paths are paths that electromagnetic waves follow as those waves interact with the structure. For example, a portion of a ray path can pass through free space, while another portion of the ray path can be located along a surface of the structure. By determining ray paths on and around the structure, and by performing electromagnetic simulations using those ray paths, a developer can select structure geometries and antenna placements that allow for reduced interference and for high signal-to-noise ratios of received and transmitted signals.

SUMMARY

According to one aspect of the present disclosure, a computing system is provided, including a processor configured to receive a mesh of a three-dimensional geometry. The processor is further configured to receive a source antenna location and a destination antenna location on the mesh. The processor is further configured to compute a ray path as an estimated shortest path between the source antenna location and the destination antenna location. The ray path includes a geodesic path over the mesh and a free space path outside the mesh. The ray path is computed at least in part by computing the geodesic path at least in part by performing inferencing at a trained neural network. Computing the ray path further includes computing the free space path at least in part by performing raytracing from a launch point located at an endpoint of the geodesic path. The processor is further configured to output the ray path to an additional computing process.

Thus, the computing system comprises a processor configured to: receive a mesh of a three-dimensional geometry; receive a source antenna location and a destination antenna location on the mesh; compute a ray path as an estimated shortest path between the source antenna location and the destination antenna location, wherein: the ray path includes a geodesic path over the mesh and a free space path outside the mesh; and the ray path is computed at least in part by: computing the geodesic path at least in part by performing inferencing at a trained neural network; and computing the free space path at least in part by performing raytracing from a launch point located at an endpoint of the geodesic path; and output the ray path to an additional computing process.

The processor may be configured to compute the geodesic path at least in part by: computing a heat vector field over the mesh; and at the trained neural network, computing the geodesic path based at least in part on the heat vector field.

The processor may be configured to compute the heat vector field at least in part by: solving a heat equation over the mesh to obtain a gradient; normalizing the gradient; and solving a Poisson equation over the normalized gradient to obtain the heat vector field.

The trained neural network may be a graph neural network (GNN), a graph convolutional neural network (GCNN), a recurrent neural network (RNN), or a transformer network.

The trained neural network may be an EikoNet model trained to approximate a solution to an Eikonal equation.

The mesh may be a weighted graph in which edge weights associated with a plurality of edges indicate distances between pairs of nodes.

The mesh may be an unweighted graph.

The processor may be further configured to: compute training shortest path data associated with the mesh, wherein the training shortest path data includes a plurality of training shortest paths between respective training source antenna locations and training destination antenna locations; and train the neural network using the training source antenna locations, the training destination antenna locations, and the training shortest path data.

The additional computing process may be a Geometric Theory of Diffraction (GTD) or Uniform Theory of Diffraction (UTD) simulation module; at the GTD or UTD simulation module, the processor may be further configured to: based at least in part on the ray path, estimate a diffracted electromagnetic field in a spatial region surrounding the three-dimensional geometry; and output the estimate of the diffracted electromagnetic field.

The three-dimensional geometry may be a geometry of: a vehicle; a satellite; or a geographical area including a communication tower.

According to a second aspect there is provided a method for use with a computing system, the method comprising: receiving a mesh of a three-dimensional geometry; receiving a source antenna location and a destination antenna location on the mesh; computing a ray path as an estimated shortest path between the source antenna location and the destination antenna location, wherein: the ray path includes a geodesic path over the mesh and a free space path outside the mesh; and the ray path is computed at least in part by: computing the geodesic path at least in part by performing inferencing at a trained neural network; and computing the free space path at least in part by performing raytracing from a launch point located at an endpoint of the geodesic path; and outputting the ray path to an additional computing process.

Computing the geodesic path may include: computing a heat vector field over the mesh; and at the trained neural network, computing the geodesic path based at least in part on the heat vector field.

The trained neural network may be a graph neural network (GNN), a graph convolutional neural network (GCNN), a recurrent neural network (RNN), or a transformer network.

The trained neural network may be an EikoNet model trained to approximate a solution to an Eikonal equation.

The method may further comprise: computing training shortest path data associated with the mesh, wherein the training shortest path data includes a plurality of training shortest paths between respective training source antenna locations and training destination antenna locations; and training the neural network using the training source antenna locations, the training destination antenna locations, and the training shortest path data.

The additional computing process may be a Geometric Theory of Diffraction (GTD) or Uniform Theory of Diffraction (UTD) simulation module; the method may further comprise, at the GTD or UTD simulation module: based at least in part on the ray path, estimating a diffracted electromagnetic field in a spatial region surrounding the three-dimensional geometry; and outputting the estimate of the diffracted electromagnetic field.

According to a third aspect there is provided a computing system comprising: a processor configured to: receive a mesh of a three-dimensional geometry; receive a source antenna location and a destination antenna location on the mesh; compute a ray path as an estimated shortest path between the source antenna location and the destination antenna location, wherein: the ray path includes a geodesic path over the mesh and a free space path outside the mesh; and the ray path is computed at least in part by: computing the geodesic path at least in part by executing a greedy search algorithm over the mesh; and computing the free space path at least in part by performing raytracing from a launch point located at an endpoint of the geodesic path; and output the ray path to an additional computing process.

The greedy search algorithm may be Dijkstra's algorithm.

The processor may further be configured to: compute respective weights associated with edges of the mesh at least in part by computing a heat vector field over the mesh; and use the weights as inputs to Dijkstra's algorithm when computing the geodesic path.

The greedy search algorithm may be a Fast Marching Method (FMM).

BRIEF DESCRIPTION OF THE DRAWINGS

FIG. 1 schematically shows a computing system including a processor configured to execute a ray path computation module, according to one example embodiment.

FIG. 2 schematically shows a plurality of ray paths computed for a mesh of a three-dimensional geometry, according to the example of FIG. 1.

FIG. 3 schematically shows an example ray path in additional detail, according to the example of FIG. 1.

FIG. 4 schematically shows the computing system when the processor is configured to utilize the Heat Method along with a trained neural network to compute a geodesic path, according to the example of FIG. 1.

FIG. 5 schematically shows the computing system when a neural network is trained, according to the example of FIG. 1.

FIG. 6 schematically shows the computing system in an example in which the Heat Method is used together with Dijkstra's algorithm, according to the example of FIG. 1.

FIG. 7 schematically shows the computing system in an example in which the processor is configured to approximate a solution to an Eikonal equation using a Fast Marching Method, according to the example of FIG. 1.

FIG. 8 schematically shows the computing system when the processor is configured to approximate a solution to an Eikonal equation at the trained neural network, according to the example of FIG. 1.

FIG. 9 schematically shows the computing system when the processor is configured to execute a Geometric Theory of Diffraction (GTD) or Uniform Theory of Diffraction (UTD) simulation module, according to the example of FIG. 1.

FIG. 10A shows a flowchart of a method for use with a computing system to compute a ray path, according to the example of FIG. 1.

FIG. 10B shows additional steps of the method of FIG. 10A that are performed in some examples when computing a geodesic path.

FIG. 10C shows additional steps of the method of FIG. 10A that can be performed to obtain the trained neural network.

FIG. 10D shows additional steps of the method of FIG. 10A that can be performed at a GTD or UTD simulation module.

FIG. 10E shows example steps that can be performed when computing the ray path as an alternative to performing inferencing at a trained machine learning model, according to the example of FIG. 10A.

FIG. 11 shows a schematic view of an example computing environment in which the computing device of FIG. 1 can be instantiated.

DETAILED DESCRIPTION

The present disclosure discusses the challenges faced in finding a ray path when utilizing Geometric Theory of Diffraction (GTD) and/or Uniform Theory of Diffraction (UTD) for computational simulation of large electromagnetic structures. The present disclosure presents a methodology that combines heat transfer, computation of Eikonal Equations, and artificial intelligence/machine learning (AI/ML) to perform a ray search with greater computational efficiency and accuracy than previous ray search techniques. The devices and methods discussed below can therefore overcome technical challenges associated with the prior approaches to the application of GTD/UTD and can extend the applicability of GTD/UTD to the simulation of electromagnetically large structures.

Introduction

Many computational Electro-Magnetics (EM) algorithms, including Finite Element Method (FEM), Finite-Difference Time-Domain (FDTD), Method of Moments (MoM), MultiLevel Fast Multipole Method (MLFMM), Physical Optics (PO) and GDT/UTD, can be employed to computationally simulate electromagnetic structures. Among these methods, the high frequency asymptotic techniques GTD/UTD are often used to simulate electrically large structures. For example, prior approaches have utilized GTD/UTD for simulating radar and antenna systems in electromagnetically large structures. Some commercially available Computational Electro-Magnetics (CEM) software tools have incorporated GTD/UTD methods in their software tool suite. However, the implementation of the GTD/UTD in these prior software tools is restricted to simple structures. Prior approaches such as these have been unable to accurately determine a ray path from a source to a target on the surface of complex geometries. Without an accurate determination of this ray path, GTD/UTD algorithms cannot be properly applied to such complex geometries.

Prior computational electromagnetics programs have been configured to compute a geodesic path from a source to a target that represents an electromagnetic wave propagating in a domain of interest, such as a surface bounded creeping wave and/or an unbounded off-platform propagating wave using the following two techniques. First, prior computational electromagnetic programs have been configured to identify a geodesic path by backtracing a geodesic path between the two locations utilizing a two-dimensional meshed surface model. However, the speed of the path search algorithm used in this approach is a function of the total number of mesh elements, and thus the larger the structure or the denser the mesh, the more time is required to resolve the ray path. To increase the accuracy of the ray path, this prior approach must increase the density of the mesh. Thus, this prior approach suffers from the drawback that search time exponentially increases with mesh density, thereby resulting in prohibitively slow and costly application when applied to large and/or complex structures.

In another prior approach, prior computational electromagnetic programs have been configured to determine the geodesic path using Eikonal equations. This approach uses the solution to an Eikonal equation on a tetrahedral mesh to compute the shortest paths between sources and targets. With this option as well, the time complexity of computing the shortest paths is a function of the mesh size. Thus, this approach can be computationally complex for large structures, and slow and costly to implement.

Disclosed Embodiments

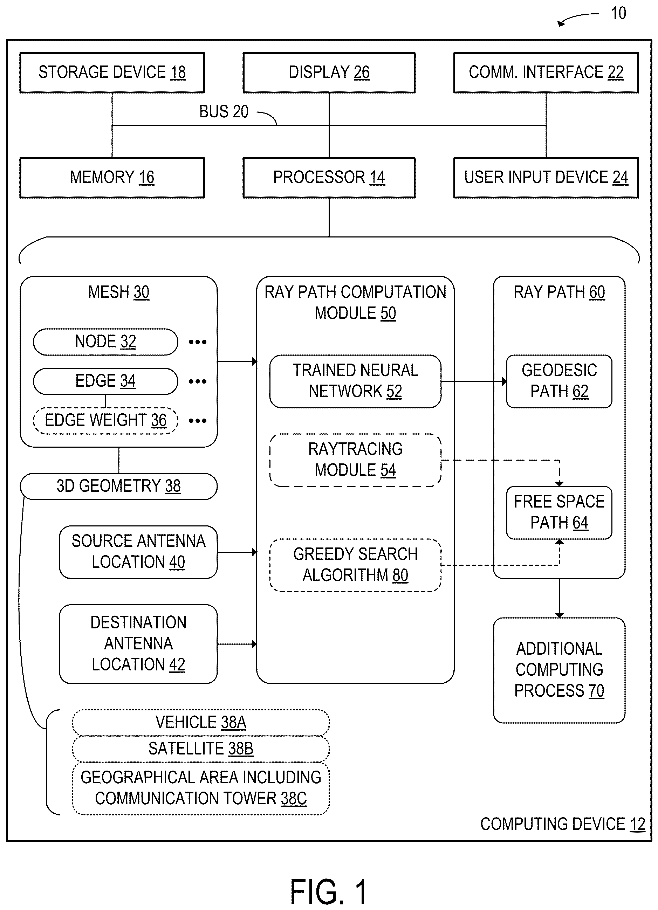

FIG. 1 schematically shows a computing system 10 including a processor 14 configured to execute a ray path computation module 50. The processor 14 is accordingly configured to compute a ray path 60. The ray path computation module 50 implements a ray path search algorithm that is less computationally complex than the above discussed prior approaches, and thus offers a processing speed and cost advantage over said approaches. The ray path search algorithm of the present disclosure replaces the backtrace technique used in prior approaches with a trained neural network 52 or a greedy search algorithm 80. The processor 14 can also compute a heat vector field or numerically solve an Eikonal equation in some examples when computing the ray path, as discussed in further detail below.

As shown in FIG. 1, the computing system 10 includes a computing device 12 having a processor 14 and associated memory 16 (e.g., RAM) communicatively connected by a communications bus 20. The computing device 12 further includes a storage device 18 storing instructions that, when executed by the processor 14 using portions of the memory 16, cause the processor 14 to implement the functions described herein. The processor is also linked by the communications bus 20 to a communications interface 22, one or more user input devices 24, and a display 26.

In the example of FIG. 1, the processor 14 is configured to receive a mesh 30 of a three-dimensional (3D) geometry 38. The 3D geometry 38 can, for example, be a geometry of a vehicle 38A, a satellite 38B, or a geographical area including a communication tower 38C. In other examples, the 3D geometry 38 can represent other types of structures or regions. The mesh 30 includes a plurality of nodes 32 that are connected by a plurality of edges 34. In some examples, the mesh 30 is an unweighted graph. In other examples, the mesh 30 is a weighted graph in which edge weights 36 associated with the plurality of edges 34 indicate distances between pairs of nodes 32. The mesh 30 may, for example, be a tetrahedral mesh.

The processor 14 is further configured to receive a source antenna location 40 and a destination antenna location 42 on the mesh 30. The source antenna location 40 and the destination antenna location 42 are nodes 32 in the mesh 30 that are used as endpoints of the ray path 60.

At the ray path computation module 50, the processor 14 is further configured to compute a ray path as an estimated shortest path between the source antenna location 40 and the destination antenna location 42. The ray path 60 includes a geodesic path 62 over the mesh 30 and a free space path 64 outside the mesh 30. In some examples, the ray path 60 includes two geodesic paths 62 that are located at the ends of the free space path 64.

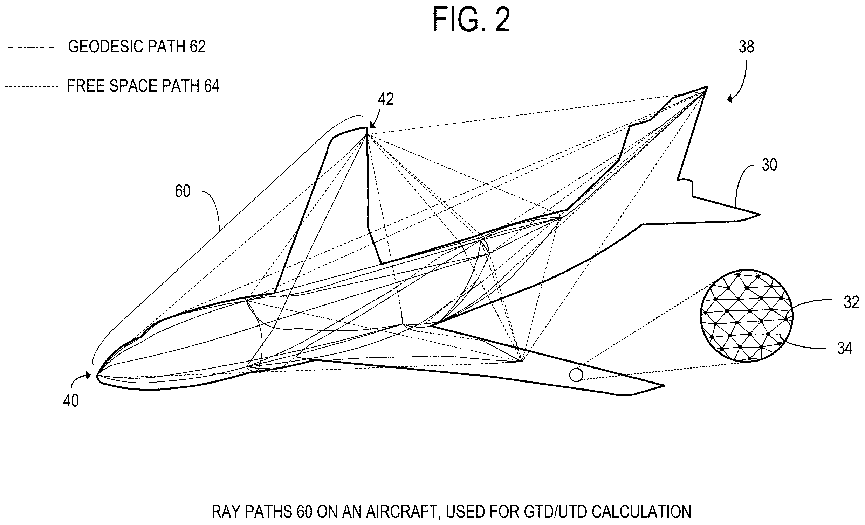

FIG. 2 schematically shows a plurality of ray paths 60 computed for a mesh 30 of a 3D geometry 38. In the example of FIG. 2, the 3D geometry 38 is a geometry of an aircraft. Ray paths 60, including respective geodesic paths 62 and free space paths 64, are shown for a plurality of different source antenna locations 40 and destination antenna locations 42 on the mesh 30. The geodesic paths 62 shown in FIG. 2 are creeping waves that propagate along the surface of the 3D geometry 38. The free space paths 64 are taken by waves propagating in free space. FIG. 2 further shows a close-up view of a portion of the mesh 30, including a plurality of nodes 32 and a plurality of edges 34.

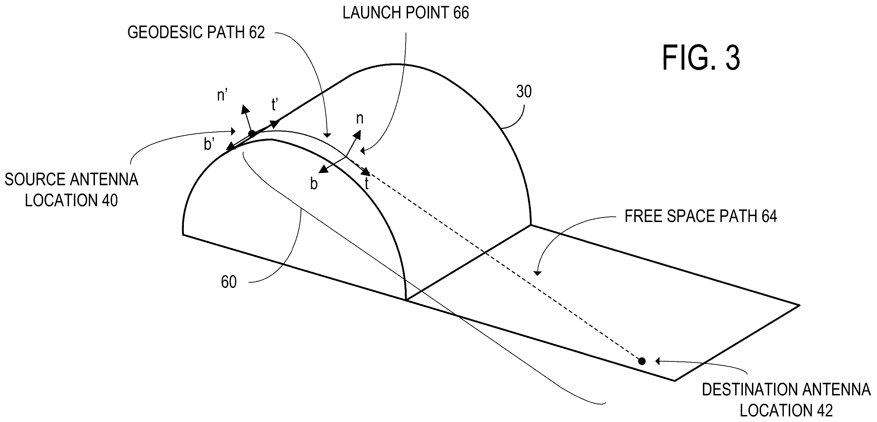

FIG. 3 schematically shows an example ray path 60 in additional detail. The ray path 60 includes a geodesic path 62 that stretches along the surface of the mesh 30 from the source antenna location 40 to a launch point 66. At the launch point 66, the ray path 60 leaves the surface of the mesh 30 and travels through free space to the destination antenna location 42, thereby forming the free space path 64. FIG. 3 further shows unit vectors (b, t, n) associated with the launch point 66 and unit vectors (b', t', n') associated with the source antenna location 40. These unit vectors are arranged such that n and n' are normal vectors of the surface of the mesh 30.

Techniques for computing the ray path 60 are discussed below.

Heat Transfer and AI/ML

A Heat Method algorithm has been proposed in K. Crane, C. Weischedel & M. Wardetzky, "Geodesics in Heat: A New Approach to Computing Geodesics based on Heat Flow", ACM Transactions on Graphics, Vol. 32, No. 5, Article 152, October 8, 2013, the entire disclosure of which is herein incorporated by reference. The Heat Method algorithm can be employed to compute a geodesic distance to a point or curve of a given domain. According to the Heat Method algorithm, a heat vector field is determined, and then the heat vector field is used to find the geodesic path between two points along the surface of the geometry. The Heat Transfer method is able to find the geodesic path across a complex two-dimensional meshed geometry with high speed. However, a drawback of the Heat Method is that it tends to propagate along the surface of a geometry only. The Heat Method does not compute the free space path 64. Thus, the Heat Method also does not identify the launch point 66, as shown in FIG. 3.

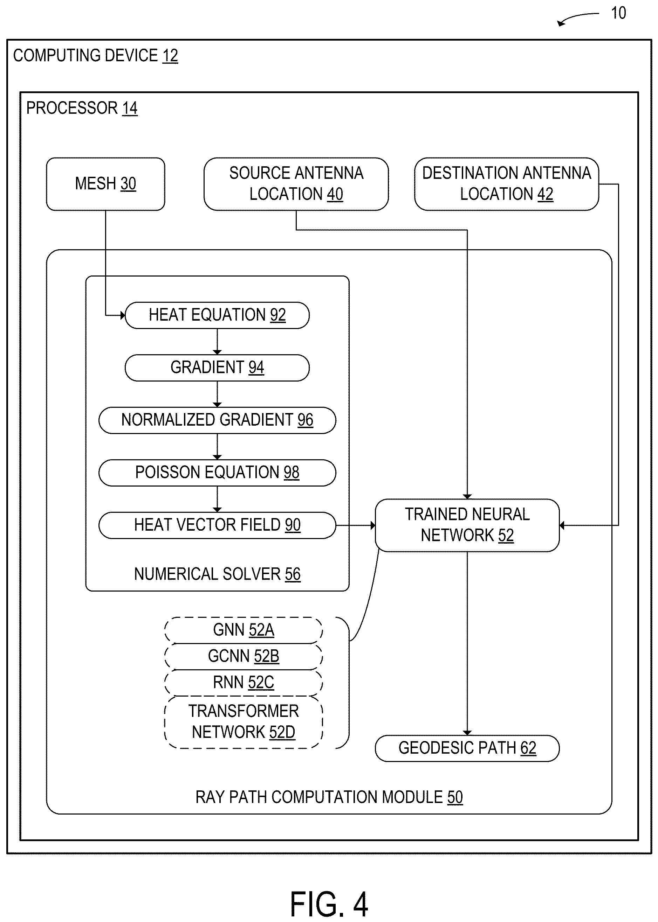

FIG. 4 schematically shows the computing system 10 when the processor 14 is configured to utilize the Heat Method along with a trained neural network 52 to compute the geodesic path 62. The processor 14 is configured to execute a numerical solver 56 included in the ray path computation module 50. At the numerical solver 56, the processor 14 is configured to compute a heat vector field 90 over the mesh 30. The heat vector field 90 can indicate electromagnetic wave propagation distances of points on the mesh 30 from the source antenna location 40 or the destination antenna location 42.

When the search domain is discretized into a mesh 30, the computation of the geodesic path 62 is equivalent to finding the shortest path in a graph with nodes and edges. If the exact distances of edges can be calculated, the graph can be expressed as a weighted graph. The problem of computing the shortest distance between two points is equivalent to finding the shortest path from one source node to one destination node in a weighted graph. On the other hand, if the edge distances are not available, the computation of the geodesic path 62 is equivalent to searching for the shortest path between two nodes in an unweighted graph. Using the Heat Method, the distances between pairs of nodes 32 can be calculated, and the computation of the geodesic path 62 is equivalent to finding the shortest path in a weighted graph.

In the example of FIG. 4, the processor 14 is configured to compute the heat vector field 90 at least in part by solving a heat equation 92 over the mesh 30. The heat equation is given as follows:

$$\dot{u} = \Delta u$$

In the above equation, $u$ is a heat function, $\dot{u}$ is the time derivative of $u$, and $\Delta u$ is the Laplacian of u. The processor 14 is configured to solve the heat equation 92 at the numerical solver 56 to obtain a gradient 94 over the mesh 30.

The processor 14 is further configured to normalize the gradient 94 to thereby obtain a normalized gradient 96. The normalized gradient can be computed as follows:

$$X = -\frac{\nabla u}{|\nabla u|}$$

In the above example, the processor 14 is further configured to reverse the sign of the gradient 94 when computing the normalized gradient 96.

The processor 14 is further configured to numerically solve a Poisson equation 98 over the normalized gradient 96 to obtain the heat vector field 90. The Poisson equation 98 is given as follows:

$$\Delta \phi = \nabla \cdot X$$

In the above equation, $\phi$ is the heat vector field 90.

At the numerical solver 56, the heat vector field 90 can be computed in a temporally discretized form. The heat equation 92 can be discretized as follows:

$$\frac{u_t - u_0}{t} = \Delta u_t$$

In the above equation, $u_t$ is the value of $u$ at a current timestep, $u_0$ is the value of $u$ at a previous timestep, and $t$ is a timestep length. The heat equation 92 can alternatively be rewritten in the following form as a linear elliptic equation:

$$(\mathrm{id} - t\Delta)u_t = u_0$$

In the above equation, id is an identity matrix. By solving the heat equation 92 in discretized form, the processor 14 is configured to efficiently compute an estimate of the heat vector field 90.

The processor 14 is further configured to computing the geodesic path 62 at the trained neural network 52 based at least in part on the heat vector field 90. In recent years, deep neural networks that can have millions of internal parameters have been developed to model problems in many domains. Several methods have been proposed for finding the shortest distance in a graph. The machine learning approaches discussed below use deep neural networks in this manner. These methods are based on pre-selected or pre-generated datasets with known results (ground truth). Neural networks are then trained on these datasets. In the examples discussed below, a neural network is trained to compute the shortest path in the graph. The trained neural network 52 can then be used for estimating a calculation of the ray path 60 from the source antenna location 40 to the destination antenna location 42 at inference time.

The trained neural network 52 has been trained to identify the geodesic path 62 over the mesh 30 when given the source antenna location 40, the destination antenna location 42, and the heat vector field 90 as input. For example, the trained neural network 52 can be a graph neural network (GNN) 52A, a graph convolutional neural network (GCNN) 52B, a recurrent neural network (RNN) 52C, or a transformer network 52D. Training of the trained neural network 52 is discussed in further detail below. Accordingly, the processor 14 is configured to generate the geodesic path 62 in a manner that is more computationally efficient than the conventional backtracing approach. The approach of FIG. 4 is approximately an order of magnitude faster than backtracing while maintaining or even improving accuracy.

Since the trained neural network 52 is derived from a training dataset, the trained neural network 52 has associated uncertainty compared to deterministic approaches such as Dijkstra's algorithm (discussed below). Uncertainty in the outputs of the trained neural network 52 can occur due to the lack of training data (epistemic uncertainty) and/or due to the distribution of the sampled data (aleatoric uncertainty), for example. The uncertainty of a trained neural network 52 can be estimated and calibrated using techniques such as Monte Carlo Dropout, Deep Ensembles, or Deep Bayesian Active Learning. With uncertainty quantification, the trained neural network 52 can report predictions with confidence estimates. The trained neural network 52 can therefore be configured to quantify the uncertainty of its output estimating the shortest ray path 60.

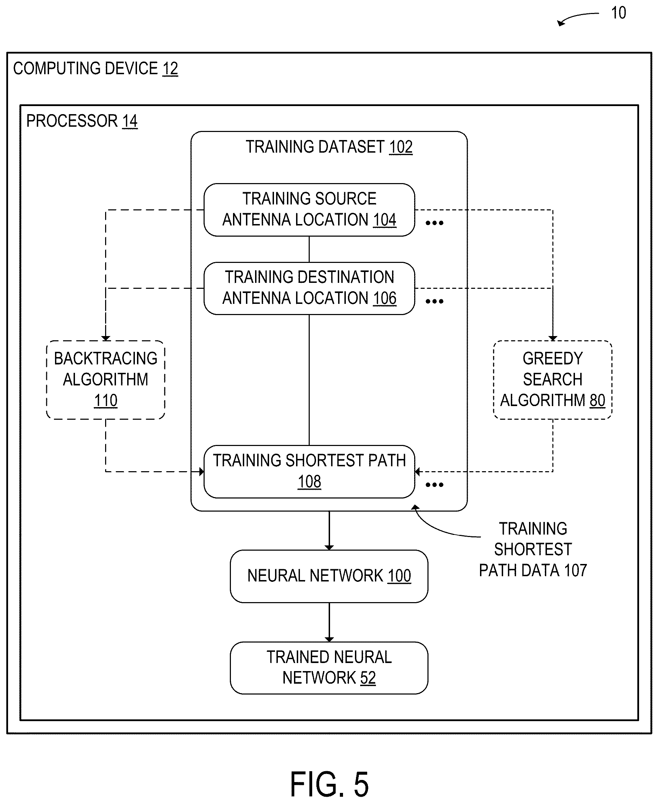

FIG. 5 schematically shows the computing system 10 when a neural network 100 is trained to obtain the trained neural network 52. As shown in the example of FIG. 5, a training dataset 102 can be generated by the existing backtracing algorithm 110. Additionally or alternatively, a greedy search algorithm 80 such as Dijkstra's algorithm can be used to generate the training dataset 102. Generating the training dataset 102 includes computing training shortest path data 107 associated with the mesh 30. The training shortest path data 107 includes a plurality of training shortest paths 108 between respective training source antenna locations 104 and training destination antenna locations 106 on the mesh 30.

The processor 14 is further configured to train the neural network 100 using the training source antenna locations 104, the training destination antenna locations 106, and the training shortest path data 107 to obtain the trained neural network 52. The trained neural network 52 can subsequently be used to efficiently calculate the approximate shortest distance between source antenna locations 40 and the destination antenna locations 42, as discussed above.

Graph Neural Network (GNN)

With a GNN approach (see, e.g., F. S. Rizi, J. Schloetterer & M. Granitzer, "Shortest Path Distance Approximation using Deep learning Techniques", 2018 IEEE/ACM International Conference on Advances in Social Networks Analysis and Mining (ASONAM)), the entire disclosure of which is herein incorporated by reference, a neural network 100 can be trained to learn embeddings that approximate the distances between the nodes 32 in the graph (i.e., the edge lengths). Training is conducted for a given geometric graph. In the case of simulations of aircraft, for example, for a given mesh 30 of the 3D geometry 38 a given aircraft, a GNN 52A is trained with a training dataset 102 computed by other methods. After the training, the GNN 52A can be used to make inferences (predictions) of the shortest path for two locations on that aircraft. The GNN approach can have high efficiency in calculating the distance from the source antenna location 40 to the destination antenna location 42 once the GNN 52A has been trained and validated.

The GNN complexity (for inference only, training not included) is: O(1), or O(m) if there are m points that the path passes

The GNN method can be useful when the exact distances between nodes 32 in the graph are not available or are expensive to calculate. The Heat Method, as discussed above, can be used to efficiently and accurately compute a distance between two points on a surface in such examples.

Graph Convolutional Neural Network (GCNN)

Convolutional Neural Networks (CNNs) that typically are used for computer vision applications such as facial recognition and autonomous driving have also been applied to finding the shortest path in a graph (See, e.g., K. Osanlou, C. Guettier, A. Bursuc, T. Cazenave, E. Jacopin, "Constrained shortest path search with graph convolutional neural networks", published on arxiv.org, Aug. 2021). Such neural networks are referred to as graph convolutional neural networks (GCNNs). Similar to the GNN method, training datasets 102 with known results (ground truth) are used for model training. The trained GCNN 52B can then be used for predicting the shortest path from one node to another in a graph.

One advantage of using a GCNN 52B is the efficiency in model prediction after training. A potential drawback of this method is that the trained GCNN 52B is typically specific to the graph geometry for which its training dataset 102 was generated.

Recurrent Neural Network (RNN)

An approach that utilizes an RNN to determine shortest paths of a graph has also been developed and tested (See D. Mack, "Finding shortest paths with graph neural networks," Octavian.AI, 2019, the disclosure of which is herein incorporated by reference). The results show similar performance to Dijkstra's algorithm in prediction after model training. The RNN approach has a drawback similar to the GCNN approach in that the RNN 52C typically has to be re-trained for each different graph geometry. However, similarly to the GCNN approach, the RNN approach also allows for efficient ray path computation subsequently to training.

As discussed above, a transformer network 52D can be used as the trained neural network 52 in some examples. In some examples, transformer network approaches can be combined with GNN approaches.

Dijkstra Algorithm plus Heat Method

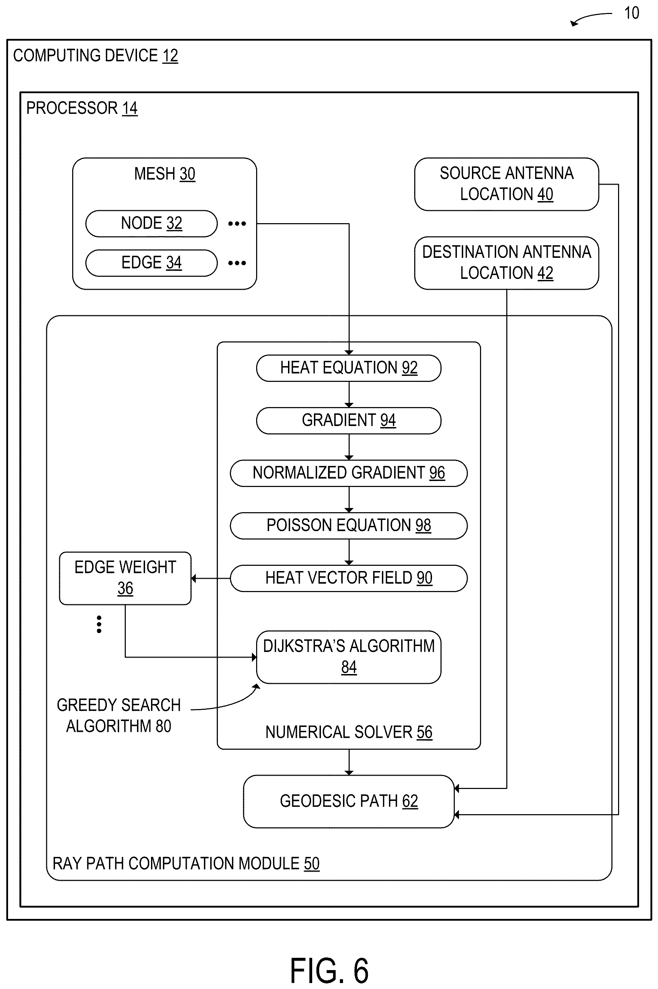

FIG. 6 schematically shows the computing system 10 in an example in which the Heat Method is used together with Dijkstra's algorithm 84 instead of a trained neural network 52. With the Heat Method, the exact distance between the source and destination points on the surface can be calculated at the numerical solver 56 by solving the partial differential equation of the equivalent heat transfer problem, as discussed above. The computation of the geodesic path 62 is therefore equivalent to finding the shortest path between two nodes 32 in a weighted graph. Dijkstra's algorithm (Dijkstra 1959, Jasika et al 2012) has been widely used in applications such as online maps to calculate the shortest distance between two nodes in a weighted graph, i.e., the shortest driving directions from one city to another. This algorithm does not perform backtracking to re-evaluate the distance. Instead, Dijkstra's algorithm 84 is an example of a greedy search algorithm 80 computed over the mesh 30.

Results of applying Dijkstra's algorithm 84 can be considered exact if the exact distances between any two nodes 32 are available. With the Heat Method, the exact distance between two points on the mesh 30 can be calculated. The processor 14 can utilize a combination of Dijkstra's algorithm 84, the Heat Method, and meshing algorithms to efficiently and accurately search for the shortest ray path.

Compared to machine-learning-based methods, Dijkstra's algorithm is physics-based and does not require creating datasets for model training, validation, and testing. The mesh 30 and Dijkstra's algorithm 84 can be used to find the launch point 66 at which the ray path 60 leaves the surface of the mesh 30. The ray path distance over the surface can be calculated through the heat vector method between the source antenna location 40 and the launch point 66. The shortest ray path 60 is, in such examples, located along the nodes 32 that Dijkstra's algorithm 84 returns. The sum of the distances along the shortest path is equal to the shortest distance from the source antenna location 40 and the launch point 66, as computed using the distances included in the heat vector field 90.

Dijkstra's Algorithm Complexity

The worst-case time complexity of Dijkstra's algorithm with the simplest implementation is
$O(v^2)$ where v = number of edges
There are variants of Dijkstra's algorithm, such as using data structures (e.g. heap) to store partial results, that can perform better with the worst-case time complexity of

$$O(v + n*\log(n))$$

where v = number of edges and n = number of nodes
The average-case time complexity is

$$O(v + n*\log(v/n)*\log(n))$$

where v = number of edges and n = number of nodes
Accordingly, Dijkstra's algorithm 84 typically has higher time complexity than neural network inferencing but does not involve training a neural network. Dijkstra's algorithm 84 is therefore well-suited to ray path computation in examples in which small numbers of ray paths 60 are computed.

Eikonal Equation and AI/ML

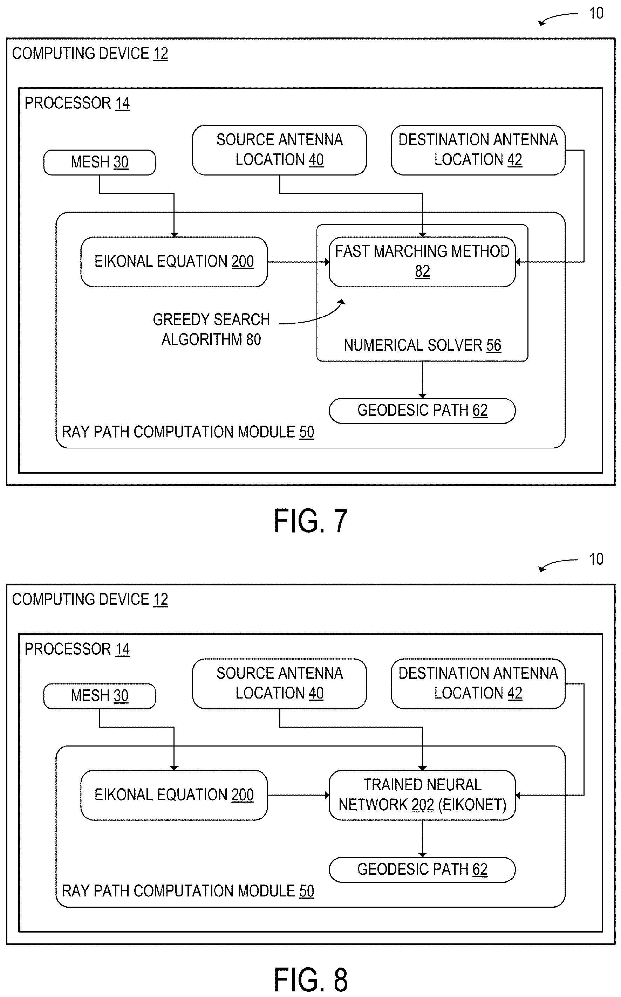

FIG. 7 schematically shows the computing system 10 in an example in which the processor 14 is configured to approximate a solution to an Eikonal equation 200 at the numerical solver 56. The Eikonal equation 200 is given by the following partial differential equation:

$$|\nabla u(x)| = 1, \qquad x \in \Omega \backslash x_0$$

with boundary condition $u(x_0) = 0$. Here, $x_0$ is the source antenna location 40 and $\Omega$ is the mesh 30. The solution to the Eikonal equation 200 can be interpreted as a distance function to $x_0$ in a given domain. The solution can be back traced to compute the shortest paths between antenna locations (M. Natali, M. Attene, & G. Ottonello, "Steepest descent paths on simplicial meshes of arbitrary dimensions," Comput. Graph. 37(6): 687-696, 2013, the disclosure of which is herein incorporated by reference). This method suffers from numerical inaccuracies near the source location and any location where the path can kink, since the solution is singular at these locations.

To address the above challenge with Eikonal equation approaches, the present disclosure provides a path straightening approach. The processor 14, in such an approach, is configured to iteratively straighten the path depending on the segment types. The path straightening approach also takes advantage of the method in N. Sharp & K. Crane, "You can find geodesic paths in triangle meshes by just flipping edges," ACM Trans. Graph. 39, 6 Article 29, 2020, the disclosure of which is herein incorporated by reference, to find the shortest path between the endpoints of the geodesic path 62.

An Eikonal equation 200 is solved for each source antenna in the present approach. Thus, lowering the computing resources (processor cycles and memory amounts) consumed as well as the clock time required to solve Eikonal equations 200 is advantageous. However, solving Eikonal equations on tetrahedral domains is computationally costly and involves solving a large system of nonlinear equations. The present approach instead utilizes the fast marching method (FMM) 82 to numerically solve the Eikonal equation 200 (See, e.g., J. N. Tsitsiklis, "Efficient algorithms for globally optimal trajectories," Proceedings of 1994 33rd IEEE Conference on Decision and Control, pp. 1368-1373 vol.2, 1994; and J. A. Sethian, "A Fast Marching Level Set Method for Monotonically Advancing Fronts," Proc. Nat. Acad. Sci., 93, 4, pp. 1591-1595, 1996, the disclosures of each of which are hereby incorporated by reference). Similarly to Dijkstra's algorithm 84, the FMM 82 is an example of a greedy search algorithm 80. The FMM 82 is a generalization of Dijkstra's algorithm 84 that marches the solution from "accepted" nodes to "unvisited" regions of the domain and uses a "narrow band" data structure to keep track of nodes 32 that are candidates for subsequent updating. The FMM 82 differs from prior approaches in that the FMM 82 uses a first order upwind scheme to approximate the solution at a given node 32.

The FMM 82 has complexity $O(NlogN)$ due to the use of a heap to organize the narrow band. The complexity can grow very quickly for fine tetrahedral meshes. The FMM 82 is serial due to the marching approach of the method and use of the heap structure. However, there have been techniques and methods proposed to parallelize Eikonal solvers. For example, Ganellari et al. introduced a parallelizable solver based on the Fast Iterative Method (FIM) with a low memory footprint (See, e.g., D. Ganellari, G. Haase, & G. Zumbusch, "A massively parallel Eikonals solver on unstructured meshes," Computing and Visualization in Science, vol 19, 2018; and Z. Fu, R. Kirby, & R. Whitaker, "A fast iterative method for solving the Eikonal equation on tetrahedral domains," SIAM J. Sci. Comput. 35(5), C473-C494, 2013, the disclosures of each of which are hereby incorporated by reference).

FIG. 8 schematically shows the computing system 10 when the processor 14 is configured to approximate a solution to an Eikonal equation 200 at the trained neural network 52. Recently, several deep learning approaches have been proposed to solve Eikonal equations 200. One approach relies on the FMM 82 and replaces the local numerical solver with a trained neural network. (See M. Lichtenstein, G. Pai, & R. Kimmel, "Deep Eikonal solvers," Scale Space and Variational Methods in Computer Vision, 38-50, 2019). However, this method uses the same update scheme as the FMM 82 and provides no decrease in computational complexity. The example of FIG. 8 instead utilizes an implementation of EikoNet 202, which was introduced by Smith et al. in 2021. (See J. Smith, K. Azizzadenesheli, Z. Ross, "EikoNet: Solving the Eikonal equation with Deep Neural Networks," IEEE Trans. On Geoscience and Remote Sensing. 59, 12, 10685-10696, 2021, the disclosure of which is herein incorporated by reference).

EikoNet 202 is a grid-free approach that allows for quick computation of the distance between any two points in a continuous domain. The neural network can be trained without needing solutions computed with the finite-difference method. EikoNet 202 is also parallelizable and has low memory overhead. As mentioned above, the solution to the Eikonal equation 200 has strong singularity at the source locations. Therefore, EikoNet 202 uses a factored formulation of the equation which mitigates the effect of the singularity.

The EikoNet approach assumes that the solution to the Eikonal equation 200 can be factored as follows:

$$u(x) = u_0(x)\tau(x)$$

where $u_0(x) = |x - x_0|$ and $\tau$ is a correction factor. Substituting the factored solution into the partial differential equation yields:

$$u_0^2(x)|\nabla\tau(x)|^2 + 2u_0(x)\tau(x)\nabla u_0(x) \cdot \nabla\tau(x) + \tau^2(x) = 1$$

In the EikoNet approach, the processor 14 trains a neural network 100 to predict $\tau$ by leveraging the differentiability of neural networks to analytically compute the gradient of the distance field. The neural network 100 is trained to minimize the difference between the true and predicted velocity model for the factored Eikonal equation. EikoNet has been shown to produce solutions consistent with the FMM 82.

There are potential technical advantages of using EikoNet for computing ray paths 60 between source antenna locations 40 and destination antenna locations 42. One advantage results from using the factored Eikonal equation. By having more accurate solutions near the singularity at the source location, the backtracing portion of the method of the present disclosure (discussed below) produces more accurate solutions, decreasing the number of iterations in the path straightening algorithm.

Another advantage is that once the neural network 100 is trained, the Eikonal equation 200 is no longer needed.

Instead, the processor 14 can compute the solution for any pair of source-receiver locations. Not having to solve the Eikonal equation 200 after training offers a significant advantage for simulations related to aircraft, for example, since such simulations often involve the computation of the distance between many antenna pairs on the aircraft. The trained neural network 52 can be trained once for each 3D geometry 38 and can subsequently be used to obtain each of the ray paths 60 computed for that geometry.

Returning to the example of FIG. 1, the processor 14 is further configured to compute the free space path 64. The free space path 64 can be computed at least in part by performing raytracing from the launch point 66 located at an endpoint of the geodesic path 62. FIG. 1 accordingly shows a raytracing module 54 included in the ray path computation module 50. At the raytracing module 54, the processor 14 can, for example, perform backtracing from the destination antenna location 42 to the launch point 66 by performing a brute-force search. In this brute-force search, the processor 14 can identify the launch point 66 that results in the shortest total length for the ray path 60, including both the geodesic path 62 and the free space path 64. Thus, the processor 14 is configured to compute the shortest ray path 60 for the source-destination pair.

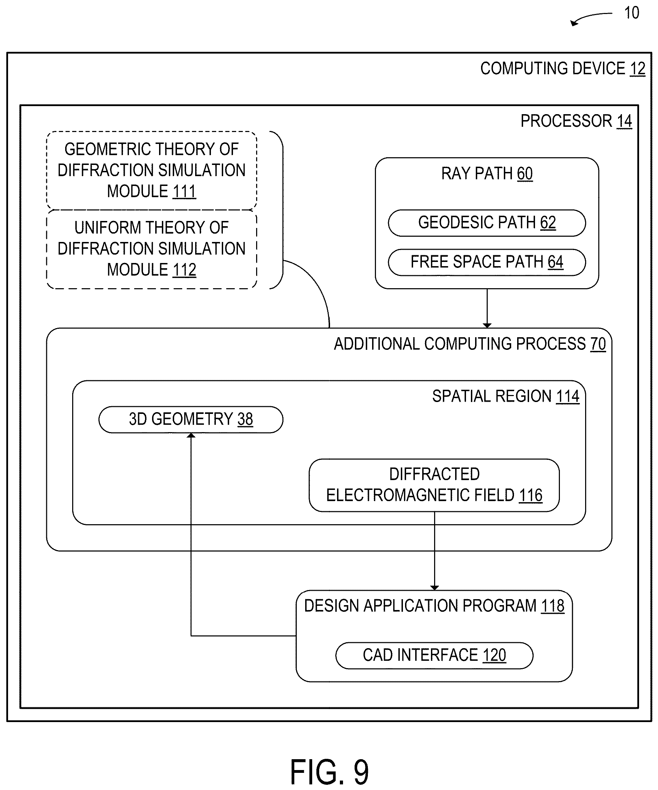

The processor 14 is further configured to output the ray path 60 to an additional computing process 70. FIG. 9 schematically shows the computing system 10 an example in which the additional computing process 70 is a Geometric Theory of Diffraction (GTD) or Uniform Theory of Diffraction (UTD) simulation module 111 or 112. At the GTD or UTD simulation module 111 or 112, the processor 14 is further configured to estimate a diffracted electromagnetic field 116 by performing a GTD or UTD simulation of the 3D geometry 38 based at least in part on the ray path. The GTD or UTD simulation is a simulation of an electromagnetic wave that travels between the source antenna location 40 and the destination antenna location 42. The processor 14 is configured to estimate the diffracted electromagnetic field 116 in a spatial region 114 surrounding the 3D geometry 38, including regions on the surface of the mesh 30 as well as outside the mesh 30.

The GTD/UTD simulation module 111 or 112 is further configured to output the estimate of the diffracted electromagnetic field 116. In some examples, the GTD/UTD simulation module 111 or 112 is configured to output the diffracted electromagnetic field 116 to a design application program 118. At the design application program 118, the processor 14 is configured to provide a computer-aided design (CAD) interface 120 via which a user can select properties of a structure. For example, the user can define and modify the 3D geometry 38 at the CAD interface 120, and such modifications can be informed by the estimate of the diffracted electromagnetic field 116. Thus, the electromagnetic simulation performed at the GTD/UTD simulation module 111 or 112 can be included in an iterative design process by which the user selects the properties of the structure.

Since the techniques discussed above allow the ray paths 60 to be computed more efficiently than via previous approaches, and since the ray paths 60 are used as inputs to the GTD/UTD simulation module 111 or 112, the ray path computation approaches discussed above can allow the user to develop the 3D geometry 38 more quickly. In addition, due to the increases in ray path computation accuracy that can be achieved using the approaches discussed above, the electromagnetic properties of the structure can be estimated more accurately, which can reduce the amount of experimentation required when designing the structure.

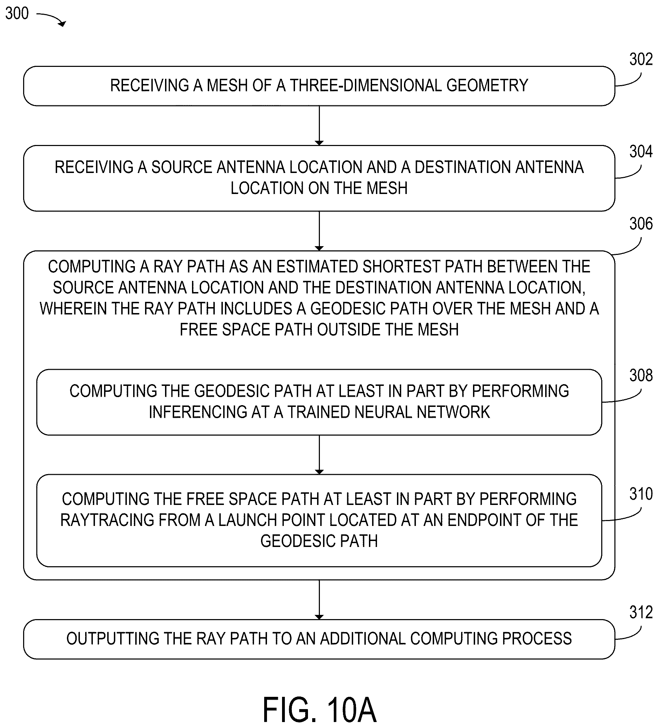

FIG. 10A shows a flowchart of a method 300 for use with a computing system to compute a ray path. At step 302, the method 300 includes receiving a mesh of a 3D geometry. As non-limiting examples, the 3D geometry can be a geometry of a vehicle, a satellite, or a geographical area including a communication tower. The mesh includes a plurality of nodes that are connected by a plurality of edges. In some examples, the mesh is a weighted graph in which edge weights associated with a plurality of edges indicate distances between pairs of nodes. In other examples, the mesh is an unweighted graph.

At step 304, the method 300 further includes receiving a source antenna location and a destination antenna location on the mesh. The source antenna location and the destination antenna location are the ray path endpoints between which electromagnetic wave propagation is simulated. The source antenna location and destination antenna location are specified as nodes of the mesh.

At step 306, the method 300 further includes computing a ray path as an estimated shortest path between the source antenna location and the destination antenna location. The ray path includes a geodesic path over the mesh and a free space path outside the mesh. The geodesic path and the free space path are two segments of the ray path that meet at a launch point. The launch point is a node in the mesh at which the ray path leaves or enters the mesh surface. In some examples, the ray path includes two geodesic paths located at respective ends of the free space path.

Step 306 includes steps 308 and 310, which are performed during computation of the ray path. At step 308, computing the ray path includes computing the geodesic path. In the example of FIG. 10A, the geodesic path is computed at least in part by performing inferencing at a trained neural network. The source antenna location, the destination antenna location, and the mesh can be used as inputs to the trained neural network inferencing when step 308 is performed. The trained neural network can, for example, be a graph neural network (GNN), a graph convolutional neural network (GCNN), a recurrent neural network (RNN), or a transformer network. In some examples, the trained neural network is an EikoNet model trained to approximate a solution to an Eikonal equation.

At step 310, step 306 further includes computing the free space path at least in part by performing raytracing from the launch point located at an endpoint of the geodesic path. Performing raytracing at step 310 can, for example, include performing a brute-force search over potential launch points located along the geodesic path in order to determine a launch point that achieves the shortest total path length.

At step 312, the method 300 further includes outputting the ray path to an additional computing process. The ray path is, in some examples, output to an electromagnetic simulation module.

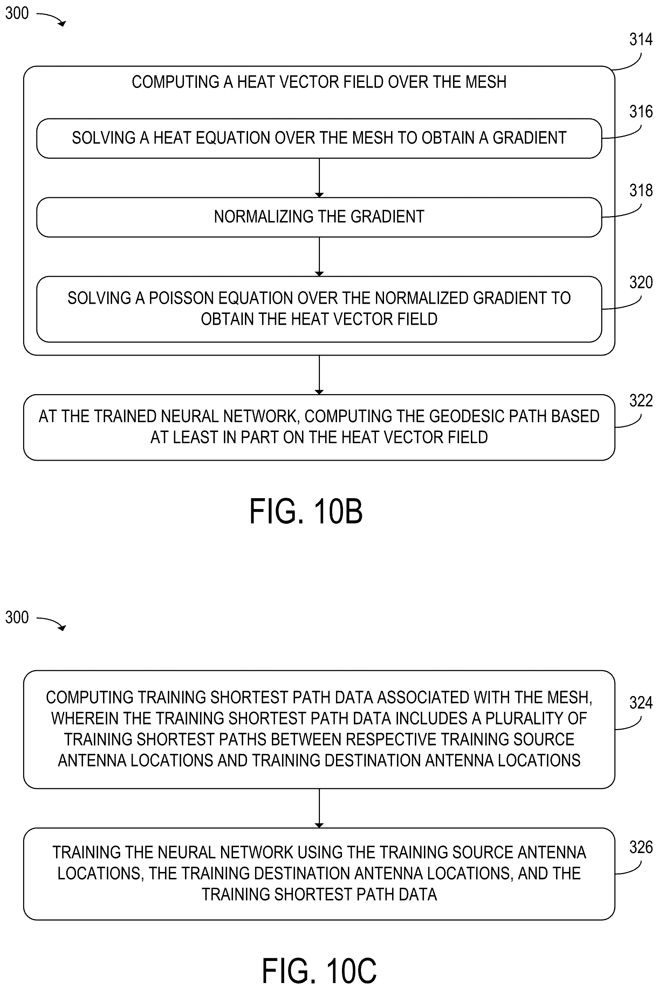

FIG. 10B shows additional steps of the method 300 that are performed in some examples when computing the geodesic path at step 308. At step 314, step 308 includes computing a heat vector field over the mesh. According to the example of FIG. 10B, computing the heat vector field at step 314 includes, at step 316, solving a heat equation over the mesh to obtain a gradient. Step 314 further includes, at step 318, normalizing the gradient. At step 320, step 314 further includes solving a Poisson equation over the normalized gradient to obtain the heat vector field. Subsequently to computing the heat vector field, step 308 further includes, at step 322, computing the geodesic path at the trained neural network based at least in part on the heat vector field. The heat vector field, the source antenna location, and the destination antenna location can be used as inputs to the trained neural network in the example of FIG. 10B.

FIG. 10C shows additional steps of the method 300 that can be performed to obtain the trained neural network. At step 324, the method 300 further includes computing training shortest path data associated with the mesh. The training shortest path data includes a plurality of training shortest paths between respective training source antenna locations and training destination antenna locations. The training shortest path data can, for example, be obtained using backtracing or a greedy search algorithm. At step 326, the method 300 further includes training the neural network using the training source antenna locations, the training destination antenna locations, and the training shortest path data. Accordingly, the neural network is trained to output estimated shortest paths across the mesh.

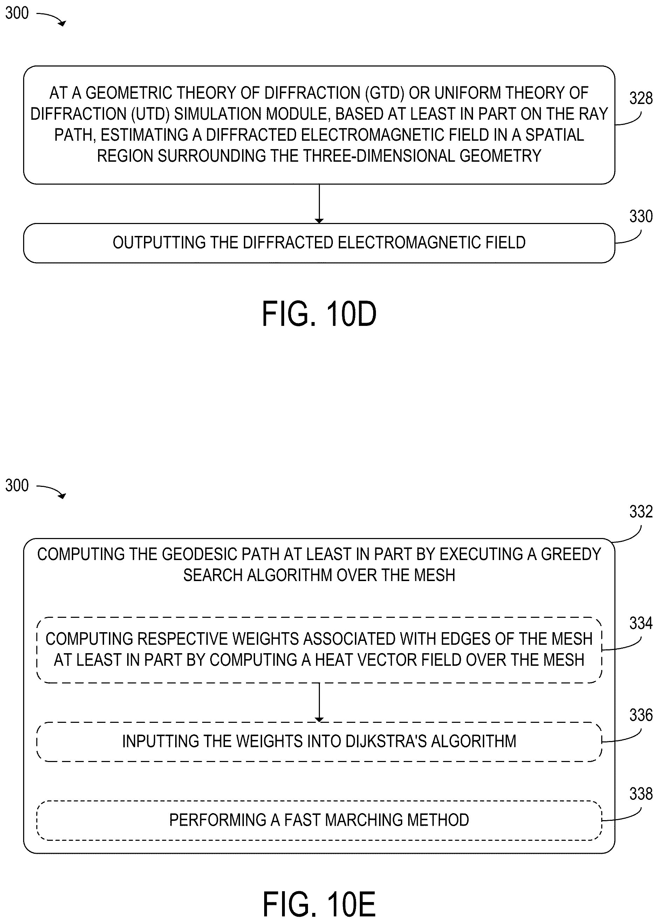

FIG. 10D shows additional steps of the method 300 that can be performed in examples in which the additional computing process is a GTD or UTD simulation module. At step 328, the method 300 further includes estimating a diffracted electromagnetic field at the GTD or UTD simulation module based at least in part on the ray path. The diffracted electromagnetic field is estimated in a spatial region surrounding the three-dimensional geometry. At step 330, the method 300 further includes outputting the estimate of the diffracted electromagnetic field. For example, the diffracted electromagnetic field can be output to a design application program at which a CAD interface is presented to a user.

FIG. 10E shows example steps that, in some examples, are performed when computing the ray path as an alternative to performing inferencing at a trained machine learning model. At step 332, step 306 can include computing the geodesic path at least in part by executing a greedy search algorithm over the mesh.

In some examples, step 332 includes steps 334 and 336, whereas in other examples, step 332 includes step 338. Steps 334 and 336 are performed in examples in which the greedy search algorithm is Dijkstra's algorithm. At step 334, step 332 can include computing respective weights associated with edges of the mesh at least in part by computing a heat vector field over the mesh. The heat vector field can be computed as discussed above with reference to FIG. 10B. At step 336, step 332 can further include inputting the weights indicated by the heat vector field into Dijkstra's algorithm. Thus, the geodesic path is computed by performing pathfinding through the weighted mesh.

In other examples, step 332 includes step 338. At step 338, the method 300 further includes performing a Fast Marching Method (FMM) over the mesh. The FMM is another example of a greedy search algorithm and is used in such examples to estimate a solution to an Eikonal equation. In some examples, the Fast Iterative Method (FIM) can be used to parallelize portions of the FMM, thereby allowing the geodesic path to be computed more quickly.

Conclusion

The GTD/UTD method is suitable for calculating the effect of radar and antenna systems on electromagnetically large structures. However, its applications are restricted by the inefficiency of the ray path search algorithm on which the GTD/UTD is based. The systems and methods of the present disclosure utilize AI/ML with the Heat Method and the Eikonal equation method to thereby speed up the ray path calculation by an estimated order of magnitude or more, while improving the accuracy of the calculated ray path. As a result, the systems and methods of the present disclosure are faster and more accurate, and thus able to process significantly more complex and electromagnetically large geometries, as compared to prior ray path computation approaches.

The methods and processes described herein are tied to a computing system of one or more computing devices. In particular, such methods and processes can be implemented as a computer-application program or service, an application-programming interface (API), a library, and/or other computer-program product.

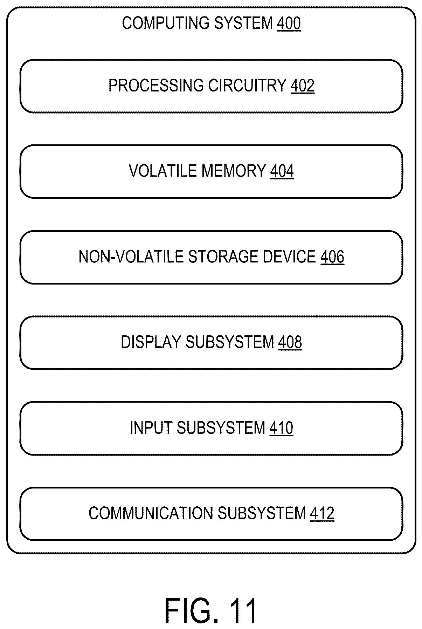

FIG. 11 schematically shows a non-limiting embodiment of a computing system 400 that can enact one or more of the methods and processes described above. Computing system 400 is shown in simplified form. Computing system 400 can embody the computing system 10 described above and illustrated in FIG. 1. Components of computing system 400 can be included in one or more personal computers, server computers, tablet computers, home-entertainment computers, network computing devices, video game devices, mobile computing devices, mobile communication devices (e.g., smartphone), and/or other computing devices, and wearable computing devices such as smart wristwatches and head mounted augmented reality devices.

Computing system 400 includes processing circuitry 402, volatile memory 404, and a non-volatile storage device 406. Computing system 400 can optionally include a display subsystem 408, input subsystem 410, communication subsystem 412, and/or other components not shown in FIG. 11.

Processing circuitry 402 typically includes one or more logic processors, which are physical devices configured to execute instructions. For example, the logic processors can be configured to execute instructions that are part of one or more applications, programs, routines, libraries, objects, components, data structures, or other logical constructs. Such instructions can be implemented to perform a task, implement a data type, transform the state of one or more components, achieve a technical effect, or otherwise arrive at a desired result.

The logic processor can include one or more physical processors configured to execute software instructions. Additionally or alternatively, the logic processor can include one or more hardware logic circuits or firmware devices configured to execute hardware-implemented logic or firmware instructions. Processors of the processing circuitry 402 can be single-core or multi-core, and the instructions executed thereon can be configured for sequential, parallel, and/or distributed processing. Individual components of the processing circuitry 402 optionally can be distributed among two or more separate devices, which can be remotely located and/or configured for coordinated processing. For example, aspects of the computing system 400 disclosed herein can be virtualized and executed by remotely accessible, networked computing devices configured in a cloud-computing configuration. In such a case, these virtualized aspects are run on different physical logic processors of various different machines, it will be understood. These different physical logic processors of the different machines will be understood to be collectively encompassed by processing circuitry 402.

Non-volatile storage device 406 includes one or more physical devices configured to hold instructions executable by the processing circuitry to implement the methods and processes described herein. When such methods and processes are implemented, the state of non-volatile storage device 406 can be transformed-e.g., to hold different data.

Non-volatile storage device 406 can include physical devices that are removable and/or built in. Non-volatile storage device 406 can include optical memory, semiconductor memory, and/or magnetic memory, or other mass storage device technology. Non-volatile storage device 406 can include nonvolatile, dynamic, static, read/write, read-only, sequential-access, location-addressable, file-addressable, and/or content-addressable devices. It will be appreciated that non-volatile storage device 406 is configured to hold instructions even when power is cut to the non-volatile storage device 406.

Volatile memory 404 can include physical devices that include random access memory. Volatile memory 404 is typically utilized by processing circuitry 402 to temporarily store information during processing of software instructions. It will be appreciated that volatile memory 404 typically does not continue to store instructions when power is cut to the volatile memory 404.

Aspects of processing circuitry 402, volatile memory 404, and non-volatile storage device 406 can be integrated together into one or more hardware-logic components. Such hardware-logic components can include field-programmable gate arrays (FPGAs), program- and application-specific integrated circuits (PASIC / ASICs), program- and application-specific standard products (PSSP / ASSPs), system-on-a-chip (SOC), and complex programmable logic devices (CPLDs), for example.

The terms "module," "program," and "engine" can be used to describe an aspect of computing system 400 typically implemented in software by a processor to perform a particular function using portions of volatile memory, which function involves transformative processing that specially configures the processor to perform the function. Thus, a module, program, or engine can be instantiated via processing circuitry 402 executing instructions held by non-volatile storage device 406, using portions of volatile memory 404. It will be understood that different modules, programs, and/or engines can be instantiated from the same application, service, code block, object, library, routine, API, function, etc. Likewise, the same module, program, and/or engine can be instantiated by different applications, services, code blocks, objects, routines, APIs, functions, etc. The terms "module," "program," and "engine" can encompass individual or groups of executable files, data files, libraries, drivers, scripts, database records, etc.

When included, display subsystem 408 can be used to present a visual representation of data held by non-volatile storage device 406. The visual representation can take the form of a graphical user interface (GUI). As the herein described methods and processes change the data held by the non-volatile storage device, and thus transform the state of the non-volatile storage device, the state of display subsystem 408 can likewise be transformed to visually represent changes in the underlying data. Display subsystem 408 can include one or more display devices utilizing virtually any type of technology. Such display devices can be combined with processing circuitry 402, volatile memory 404, and/or non-volatile storage device 406 in a shared enclosure, or such display devices can be peripheral display devices.

When included, input subsystem 410 can comprise or interface with one or more user-input devices such as a keyboard, mouse, touch screen, camera, or microphone.

When included, communication subsystem 412 can be configured to communicatively couple various computing devices described herein with each other, and with other devices. Communication subsystem 412 can include wired and/or wireless communication devices compatible with one or more different communication protocols. As non-limiting examples, the communication subsystem can be configured for communication via a wired or wireless local- or wide-area network, broadband cellular network, etc. In some embodiments, the communication subsystem can allow computing system 400 to send and/or receive messages to and/or from other devices via a network such as the Internet.

Further, the disclosure comprises configurations according to the following clauses.

Clause 1. A computing system comprising: a processor configured to: receive a mesh of a three-dimensional geometry; receive a source antenna location and a destination antenna location on the mesh; compute a ray path as an estimated shortest path between the source antenna location and the destination antenna location, wherein: the ray path includes a geodesic path over the mesh and a free space path outside the mesh; and the ray path is computed at least in part by: computing the geodesic path at least in part by performing inferencing at a trained neural network; and computing the free space path at least in part by performing raytracing from a launch point located at an endpoint of the geodesic path; and output the ray path to an additional computing process.

Clause 2. The computing system according to Clause 1, wherein the processor is configured to compute the geodesic path at least in part by: computing a heat vector field over the mesh; and at the trained neural network, computing the geodesic path based at least in part on the heat vector field.

Clause 3. The computing system according to Clause 2, wherein the processor is configured to compute the heat vector field at least in part by: solving a heat equation over the mesh to obtain a gradient; normalizing the gradient; and solving a Poisson equation over the normalized gradient to obtain the heat vector field.

Clause 4. The computing system according to any of Clauses 1-3, wherein the trained neural network is a graph neural network (GNN), a graph convolutional neural network (GCNN), a recurrent neural network (RNN), or a transformer network.

Clause 5. The computing system according to Clause 1 or 4, wherein the trained neural network is an EikoNet model trained to approximate a solution to an Eikonal equation.

Clause 6. The computing system according to any of Clauses 1-5, wherein the mesh is a weighted graph in which edge weights associated with a plurality of edges indicate distances between pairs of nodes.

Clause 7. The computing system according to any of Clauses 1-5, wherein the mesh is an unweighted graph.

Clause 8. The computing system according to any of Clauses 1-7, wherein the processor is further configured to: compute training shortest path data associated with the mesh, wherein the training shortest path data includes a plurality of training shortest paths between respective training source antenna locations and training destination antenna locations; and train the neural network using the training source antenna locations, the training destination antenna locations, and the training shortest path data.

Clause 9. The computing system of according to any of Clauses 1-8, wherein: the additional computing process is a Geometric Theory of Diffraction (GTD) or Uniform Theory of Diffraction (UTD) simulation module; at the GTD or UTD simulation module, the processor is further configured to: based at least in part on the ray path, estimate a diffracted electromagnetic field in a spatial region surrounding the three-dimensional geometry; and output the estimate of the diffracted electromagnetic field.

Clause 10. The computing system according to any of Clauses 1-9, wherein the three-dimensional geometry is a geometry of: a vehicle; a satellite; or a geographical area including a communication tower.

Clause 11. A method for use with a computing system, the method comprising: receiving a mesh of a three-dimensional geometry; receiving a source antenna location and a destination antenna location on the mesh; computing a ray path as an estimated shortest path between the source antenna location and the destination antenna location, wherein: the ray path includes a geodesic path over the mesh and a free space path outside the mesh; and the ray path is computed at least in part by: computing the geodesic path at least in part by performing inferencing at a trained neural network; and computing the free space path at least in part by performing raytracing from a launch point located at an endpoint of the geodesic path; and outputting the ray path to an additional computing process.

Clause 12. The method according to Clause 11, wherein computing the geodesic path includes: computing a heat vector field over the mesh; and at the trained neural network, computing the geodesic path based at least in part on the heat vector field.

Clause 13. The method according to Clause 11 or 12, wherein the trained neural network is a graph neural network (GNN), a graph convolutional neural network (GCNN), a recurrent neural network (RNN), or a transformer network.

Clause 14. The method according to Clause 11 or 13, wherein the trained neural network is an EikoNet model trained to approximate a solution to an Eikonal equation.

Clause 15. The method according to any of Clauses 11-14, further comprising: computing training shortest path data associated with the mesh, wherein the training shortest path data includes a plurality of training shortest paths between respective training source antenna locations and training destination antenna locations; and training the neural network using the training source antenna locations, the training destination antenna locations, and the training shortest path data.

Clause 16. The method according to any of Clauses 11-15, wherein: the additional computing process is a Geometric Theory of Diffraction (GTD) or Uniform Theory of Diffraction (UTD) simulation module; the method further comprises, at the GTD or UTD simulation module: based at least in part on the ray path, estimating a diffracted electromagnetic field in a spatial region surrounding the three-dimensional geometry; and outputting the estimate of the diffracted electromagnetic field.

Clause 17. A computing system comprising: a processor configured to: receive a mesh of a three-dimensional geometry; receive a source antenna location and a destination antenna location on the mesh; compute a ray path as an estimated shortest path between the source antenna location and the destination antenna location, wherein: the ray path includes a geodesic path over the mesh and a free space path outside the mesh; and the ray path is computed at least in part by: computing the geodesic path at least in part by executing a greedy search algorithm over the mesh; and computing the free space path at least in part by performing raytracing from a launch point located at an endpoint of the geodesic path; and output the ray path to an additional computing process.

Clause 18. The computing system according to Clause 17, wherein the greedy search algorithm is Dijkstra's algorithm.

Clause 19. The computing system according to Clause 18, wherein the processor is further configured to: compute respective weights associated with edges of the mesh at least in part by computing a heat vector field over the mesh; and use the weights as inputs to Dijkstra's algorithm when computing the geodesic path.

Clause 20. The computing system according to Clause 17, wherein the greedy search algorithm is a Fast Marching Method (FMM).

"And/or" as used herein is defined as the inclusive or V, as specified by the following truth table:

| A | B | AVB |
|---|---|---|
| True | True | True |
| True | False | True |
| False | True | True |
| False | False | False |

It will be understood that the configurations and/or approaches described herein are exemplary in nature, and that these specific embodiments or examples are not to be considered in a limiting sense, because numerous variations are possible. The specific routines or methods described herein can represent one or more of any number of processing strategies. As such, various acts illustrated and/or described can be performed in the sequence illustrated and/or described, in other sequences, in parallel, or omitted. Likewise, the order of the above-described processes can be changed.

The subject matter of the present disclosure includes all novel and non-obvious combinations and sub-combinations of the various processes, systems and configurations, and other features, functions, acts, and/or properties disclosed herein, as well as any and all equivalents thereof.

**Claims**

1. A computing system (10) comprising:
   a processor (14) configured to:

   receive a mesh (30) of a three-dimensional geometry (38);
   receive a source antenna location (40) and a destination antenna location (42) on the mesh;
   compute a ray path (60) as an estimated shortest path between the source antenna location and the destination antenna location, wherein:

   the ray path includes a geodesic path (62) over the mesh and a free space path (64) outside the mesh; and
   the ray path is computed at least in part by:

   computing the geodesic path at least in part by performing inferencing at a trained neural network (52) or at least in part by executing a greedy search algorithm (80) over the mesh; and
   computing the free space path at least in part by performing raytracing from a launch point (66) located at an endpoint of the geodesic path; and

output the ray path to an additional computing process (70).

2. The computing system of claim 1, wherein the processor is configured to compute the geodesic path at least in part by:

computing a heat vector field (90) over the mesh; and
at the trained neural network, computing the geodesic path based at least in part on the heat vector field.

3. The computing system of claim 2, wherein the processor is configured to compute the heat vector field at least in part by:

solving a heat equation (92) over the mesh to obtain a gradient (94);
normalizing the gradient; and
solving a Poisson equation (98) over the normalized gradient to obtain the heat vector field.

4. The computing system of any preceding claim, wherein the trained neural network is a graph neural network (GNN) (52A), a graph convolutional neural network (GCNN) (52B), a recurrent neural network (RNN) (52C), or a transformer network (52D).

5. The computing system of any of claims 1 to 3, wherein the trained neural network is an EikoNet model (202) trained to approximate a solution to an Eikonal equation (200).

6. The computing system of any preceding claim, wherein the mesh is a weighted graph in which edge weights (36) associated with a plurality of edges (34) indicate distances between pairs of nodes (32).

7. The computing system of any of claims 1 to 5, wherein the mesh is an unweighted graph.

8. The computing system of any preceding claim, wherein the processor is further configured to:

compute training shortest path data (107) associated with the mesh, wherein the training shortest path data includes a plurality of training shortest paths (108) between respective training source antenna locations (104) and training destination antenna locations (106); and
train the neural network using the training source antenna locations, the training destination antenna locations, and the training shortest path data.

9. The computing system of any preceding claim, wherein:

the additional computing process is a Geometric Theory of Diffraction (GTD) or Uniform Theory of Diffraction (UTD) simulation module (111, 112);
at the GTD or UTD simulation module, the processor is further configured to:

based at least in part on the ray path, estimate a diffracted electromagnetic field (116) in a spatial region (114) surrounding the three-dimensional geometry; and
output the estimate of the diffracted electromagnetic field.

10. The computing system of any preceding claim, wherein the three-dimensional geometry is a geometry of:

a vehicle (38A);
a satellite (38B); or
a geographical area including a communication tower (38C).

11. The computing system of claim 1, wherein the greedy search algorithm is Dijkstra's algorithm (84).

12. The computing system of claim 11, wherein the processor is further configured to:

compute respective weights (36) associated with edges (34) of the mesh at least in part by computing a heat vector field (90) over the mesh; and

use the weights as inputs to Dijkstra's algorithm when computing the geodesic path.

13. The computing system of claim 1, wherein the greedy search algorithm is a Fast Marching Method (FMM) (82).

14. A method (300) for use with a computing system, the method comprising:

receiving (302) a mesh (30) of a three-dimensional geometry;
receiving (304) a source antenna location (40) and a destination antenna location (42) on the mesh;
computing (306) a ray path (60) as an estimated shortest path between the source antenna location and the destination antenna location, wherein:

the ray path includes a geodesic path (62) over the mesh and a free space path (64) outside the mesh; and
the ray path is computed at least in part by:

computing (308) the geodesic path at least in part by performing inferencing at a trained neural network (52) or at least in part by executing a greedy search algorithm (80) over the mesh; and
computing (310) the free space path at least in part by performing raytracing from a launch point (66) located at an endpoint of the geodesic path; and

outputting (312) the ray path to an additional computing process (70).

15. The method of claim 14, further comprising:

computing training shortest path data associated with the mesh, wherein the training shortest path data includes a plurality of training shortest paths between respective training source antenna locations and training destination antenna locations (324); and
training the neural network using the training source antenna locations, the training destination antenna locations, and the training shortest path data (326).

10

**COMPUTING DEVICE 12**

| STORAGE DEVICE 18 | DISPLAY 26 | COMM. INTERFACE 22 |

BUS 20

| MEMORY 16 | PROCESSOR 14 | USER INPUT DEVICE 24 |

**MESH 30**
- NODE 32 ...
- EDGE 34 ...
- EDGE WEIGHT 36 ...

3D GEOMETRY 38

SOURCE ANTENNA LOCATION 40

DESTINATION ANTENNA LOCATION 42

**RAY PATH COMPUTATION MODULE 50**

TRAINED NEURAL NETWORK 52

RAYTRACING MODULE 54

GREEDY SEARCH ALGORITHM 80

**RAY PATH 60**

GEODESIC PATH 62

FREE SPACE PATH 64

ADDITIONAL COMPUTING PROCESS 70

VEHICLE 38A
SATELLITE 38B
GEOGRAPHICAL AREA INCLUDING COMMUNICATION TOWER 38C

**FIG. 1**

## FIG. 2

—— GEODESIC PATH 62

------- FREE SPACE PATH 64

RAY PATHS 60 ON AN AIRCRAFT, USED FOR GTD/UTD CALCULATION

EP 4 726 608 A2

LAUNCH POINT 66

GEODESIC PATH 62

FIG. 3

n'    t'

b'

n

30

SOURCE ANTENNA
LOCATION 40

b    t

FREE SPACE PATH 64

60

DESTINATION ANTENNA
LOCATION 42

EP 4 726 608 A2

10

COMPUTING DEVICE 12

PROCESSOR 14

MESH 30

SOURCE ANTENNA LOCATION 40

DESTINATION ANTENNA LOCATION 42

HEAT EQUATION 92

↓

GRADIENT 94

↓

NORMALIZED GRADIENT 96

↓

POISSON EQUATION 98

↓

HEAT VECTOR FIELD 90

NUMERICAL SOLVER 56

TRAINED NEURAL NETWORK 52

GNN 52A

GCNN 52B

RNN 52C

TRANSFORMER NETWORK 52D

GEODESIC PATH 62

RAY PATH COMPUTATION MODULE 50

FIG. 4

10

COMPUTING DEVICE 12

PROCESSOR 14

TRAINING DATASET 102

TRAINING SOURCE
ANTENNA LOCATION 104 • • •

TRAINING DESTINATION
ANTENNA LOCATION 106 • • •

BACKTRACING
ALGORITHM
110

GREEDY
SEARCH
ALGORITHM 80

TRAINING SHORTEST PATH
108 • • •

TRAINING
SHORTEST
PATH DATA 107

NEURAL NETWORK 100

TRAINED NEURAL
NETWORK 52

FIG. 5

10

COMPUTING DEVICE 12

PROCESSOR 14

MESH 30

NODE 32 •••

EDGE 34 •••

SOURCE ANTENNA
LOCATION 40

DESTINATION ANTENNA
LOCATION 42

HEAT EQUATION 92

GRADIENT 94

NORMALIZED GRADIENT 96

POISSON EQUATION 98

EDGE WEIGHT
36

HEAT VECTOR FIELD 90

DIJKSTRA'S ALGORITHM
84

GREEDY SEARCH
ALGORITHM 80

NUMERICAL SOLVER 56

GEODESIC PATH 62

RAY PATH COMPUTATION MODULE 50

FIG. 6

10

COMPUTING DEVICE 12

PROCESSOR 14

MESH 30

SOURCE ANTENNA
LOCATION 40

DESTINATION ANTENNA
LOCATION 42

RAY PATH COMPUTATION MODULE 50

EIKONAL EQUATION 200

FAST MARCHING METHOD
82

GREEDY SEARCH
ALGORITHM 80

NUMERICAL SOLVER 56

GEODESIC PATH 62

FIG. 7

10

COMPUTING DEVICE 12

PROCESSOR 14

MESH 30

SOURCE ANTENNA
LOCATION 40

DESTINATION ANTENNA
LOCATION 42

RAY PATH COMPUTATION MODULE 50

EIKONAL EQUATION 200

TRAINED NEURAL
NETWORK 202 (EIKONET)

GEODESIC PATH 62

FIG. 8

FIG. 9

300 ⟍

RECEIVING A MESH OF A THREE-DIMENSIONAL GEOMETRY  302

RECEIVING A SOURCE ANTENNA LOCATION AND A DESTINATION ANTENNA LOCATION ON THE MESH  304

COMPUTING A RAY PATH AS AN ESTIMATED SHORTEST PATH BETWEEN THE SOURCE ANTENNA LOCATION AND THE DESTINATION ANTENNA LOCATION, WHEREIN THE RAY PATH INCLUDES A GEODESIC PATH OVER THE MESH AND A FREE SPACE PATH OUTSIDE THE MESH  306

COMPUTING THE GEODESIC PATH AT LEAST IN PART BY PERFORMING INFERENCING AT A TRAINED NEURAL NETWORK  308

COMPUTING THE FREE SPACE PATH AT LEAST IN PART BY PERFORMING RAYTRACING FROM A LAUNCH POINT LOCATED AT AN ENDPOINT OF THE GEODESIC PATH  310

OUTPUTTING THE RAY PATH TO AN ADDITIONAL COMPUTING PROCESS  312

FIG. 10A

300 —

314

COMPUTING A HEAT VECTOR FIELD OVER THE MESH

316

SOLVING A HEAT EQUATION OVER THE MESH TO OBTAIN A GRADIENT

318

NORMALIZING THE GRADIENT

320

SOLVING A POISSON EQUATION OVER THE NORMALIZED GRADIENT TO OBTAIN THE HEAT VECTOR FIELD

322

AT THE TRAINED NEURAL NETWORK, COMPUTING THE GEODESIC PATH BASED AT LEAST IN PART ON THE HEAT VECTOR FIELD

FIG. 10B

300 —

COMPUTING TRAINING SHORTEST PATH DATA ASSOCIATED WITH THE MESH, WHEREIN THE TRAINING SHORTEST PATH DATA INCLUDES A PLURALITY OF TRAINING SHORTEST PATHS BETWEEN RESPECTIVE TRAINING SOURCE ANTENNA LOCATIONS AND TRAINING DESTINATION ANTENNA LOCATIONS

324

TRAINING THE NEURAL NETWORK USING THE TRAINING SOURCE ANTENNA LOCATIONS, THE TRAINING DESTINATION ANTENNA LOCATIONS, AND THE TRAINING SHORTEST PATH DATA

326

FIG. 10C

300 —

AT A GEOMETRIC THEORY OF DIFFRACTION (GTD) OR UNIFORM THEORY OF DIFFRACTION (UTD) SIMULATION MODULE, BASED AT LEAST IN PART ON THE RAY PATH, ESTIMATING A DIFFRACTED ELECTROMAGNETIC FIELD IN A SPATIAL REGION SURROUNDING THE THREE-DIMENSIONAL GEOMETRY — 328

OUTPUTTING THE DIFFRACTED ELECTROMAGNETIC FIELD — 330

# FIG. 10D

300 —

332

COMPUTING THE GEODESIC PATH AT LEAST IN PART BY EXECUTING A GREEDY SEARCH ALGORITHM OVER THE MESH

334

COMPUTING RESPECTIVE WEIGHTS ASSOCIATED WITH EDGES OF THE MESH AT LEAST IN PART BY COMPUTING A HEAT VECTOR FIELD OVER THE MESH

336

INPUTTING THE WEIGHTS INTO DIJKSTRA'S ALGORITHM

338

PERFORMING A FAST MARCHING METHOD

# FIG. 10E

COMPUTING SYSTEM 400

PROCESSING CIRCUITRY 402

VOLATILE MEMORY 404

NON-VOLATILE STORAGE DEVICE 406

DISPLAY SUBSYSTEM 408

INPUT SUBSYSTEM 410

COMMUNICATION SUBSYSTEM 412

FIG. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63512356

- US 60180724

**Non-patent literature cited in the description**

- **K. CRANE** ; **C. WEISCHEDEL** ; **M. WARDETZKY**. Geodesics in Heat: A New Approach to Computing Geodesics based on Heat Flow. *ACM Transactions on Graphics*, 08 October 2013, vol. 32 (5)
- **F. S. RIZI** ; **J. SCHLOETTERER** ; **M. GRANITZER**. Shortest Path Distance Approximation using Deep learning Techniques. *2018 IEEE/ACM International Conference on Advances in Social Networks Analysis and Mining (ASONAM)*, 2018
- **K. OSANLOU** ; **C. GUETTIER** ; **A. BURSUC** ; **T. CAZENAVE** ; **E. JACOPIN**. Constrained shortest path search with graph convolutional neural networks. *arxiv.org*, August 2021
- **D. MACK**. Finding shortest paths with graph neural networks. *Octavian.AI,*, 2019
- **M. NATALI** ; **M. ATTENE** ; **G. OTTONELLO**. Steepest descent paths on simplicial meshes of arbitrary dimensions. *Comput. Graph.*, 2013, vol. 37 (6), 687-696
- **N. SHARP** ; **K. CRANE**. You can find geodesic paths in triangle meshes by just flipping edges. *ACM Trans. Graph.*, 2020, vol. 39 (6)

- **J. N. TSITSIKLIS**. Efficient algorithms for globally optimal trajectories. *Proceedings of 1994 33rd IEEE Conference on Decision and Control,*, 1994, vol. 2, 1368-1373
- **J. A. SETHIAN**. A Fast Marching Level Set Method for Monotonically Advancing Fronts. *Proc. Nat. Acad. Sci.*, 1996, vol. 93 (4), 1591-1595
- **D. GANELLARI** ; **G. HAASE** ; **G. ZUMBUSCH**. A massively parallel Eikonals solver on unstructured meshes. *Computing and Visualization in Science*, 2018, vol. 19
- **Z. FU** ; **R. KIRBY** ; **R. WHITAKER**. A fast iterative method for solving the Eikonal equation on tetrahedral domains. *SIAM J. Sci. Comput.*, 2013, vol. 35 (5), C473-C494
- **M. LICHTENSTEIN** ; **G. PAI** ; **R. KIMMEL**. Deep Eikonal solvers. *Scale Space and Variational Methods in Computer Vision,*, 2019, 38-50
- **J. SMITH** ; **K. AZIZZADENESHELI** ; **Z. ROSS**. EikoNet: Solving the Eikonal equation with Deep Neural Networks. *IEEE Trans. On Geoscience and Remote Sensing.*, 2021, vol. 59 (12), 10685-10696